# EUROPEAN PATENT APPLICATION

(11) **EP 0 537 719 A1**
(43) Date of publication of application: **21.04.1993**
(21) Application number: 92117564.2
(22) Date of filing: 14.10.1992
(51) Int. Cl.: B60P 1/64

(54) **Fixture for onloading, offloading and tipping industrial vehicle bodies**

(30) Priority: 16.10.1991 IT BS910111
(71) Applicant: Malzanini, Alberto, I-25060 Brescia (IT)
(72) Inventor: Malzanini, Alberto, I-25060 Brescia (IT)
(74) Representative: Boggio, Luigi

(57) **Abstract**

Fixture for onloading, offloading and tilting industrial vehicle bodies, and comprising a frame (10) supporting a vehicle body (12), at least one hook arm (15) engaging an eye (13) of the body (12), at least one front lift lever (16) extending rearwards and pivoting on a fulcrum (16a) to rotate with respect to the frame (10), and at least one hydraulic control cylinder (18) for raising the front lever (16). The cylinder (18) is connected to the front lever (16) indirectly via a system of levers and joints (19-23) adapted to cause a variation of the transmission ratio between the cylinder (18) and the front lever (16) in such a manner as to obtain the available power with its components of driving torque and speed corresponding to the value of the resisting torque to be overcome in any position thereof during the onloading, the offloading and tipping cycles.

## Description

The present invention relates to a fixture for onloading, offloading or on-vehicle tipping of industrial vehicle bodies or containers.

For various types of application, trucks are employed featuring what is known as offloadable bodies or containers, with on-vehicle fixtures, possibly hydraulically operated, for onloading, offloading or tipping the vehicle body.

One known embodiment of such a fixture comprises an arm fitted at the top with a hook engaging an eye on the body, and connected in articulating manner at the bottom to at least a first lift lever. This extends rearwards between a dummy frame and the vehicle body, and is connected in articulated manner to a second lever in turn pivoting on a shaft at the rear of the frame. The arm is powered by a hydraulic cylinder, and the lever connected to at least another hydraulic control cylinder, secured to the counterframe, for onloading, offloading and tipping the vehicle body.

A device is provided for locking and releasing the second lever in relation to the frame or body. When the second lever is locked to the frame, the hydraulic control cylinder provides, via the first lever, for offloading the body in one direction and onloading it in the opposite direction, with the aid of the hooked arm. Conversely, when the second lever is locked to the body, the hydraulic control cylinder provides, via the first and second levers, for on-vehicle tipping of the body.

A major drawback of the aforementioned system is that the maximum torque obtainable from the hydraulic control cylinder/s is lowest at the points wherein the resisting torque is maximum, and is unnecessarily high at other points. This is due, for size and rotation reasons, to the minimum lever arm of the cylinder/s at the more critical stages of the operating cycle, so that large-size cylinders and high-pressure pumps are required for overcoming the resisting torque, thus increasing the power and strength requirement and the weight of the fixture.

It is an object of the present invention to overcome the above drawback and so improve the operating performance of an industrial vehicle body onloading, offloading and tilting fixture, so that the torque and speed components of the available power are distributed logically as a function of the resisting torque.

According to the present invention, there is provided a fixture as claimed in Claim 1.

An advantage of the fixture according to the present invention resides in enabling a substantial reduction, with obvious cost benefits, in the size or number of actuating cylinders, maximum pressure of the drive fluid, maximum power requirement, and the strength and weight of the structure as compared with known systems. In other words, under the same conditions as compared with the known state of the art, the fixture according to the present invention provides for handling heavier loads, or, for a given load, for employing smaller, more compact, cheaper hydraulic cylinders, pumps, etc.

A non-limiting embodiment of the present invention will be described by way of example with reference to the accompanying drawings, in which:
Fig.1 shows a side view of the fixture at the initial, intermediate and final tilting stages;
Fig.2 shows a side view of the fixture at the onloading and offloading stages;

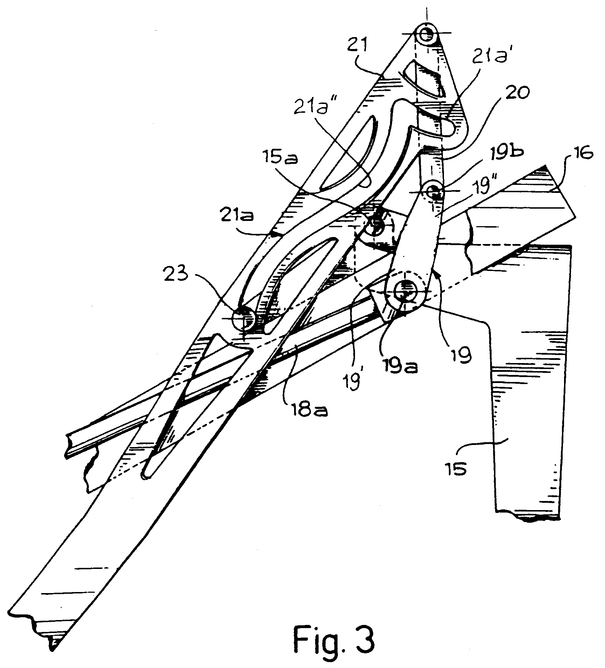

Fig.3 shows an enlarged detail of the fixture along line III-III in Fig. 4;
Fig.4 shows a rear view of the fixture in the end-of-offloading or start-of-onloading position.
Fig.5 shows a diagram of the various positions in the offloading cycle.

The fixture according to the present invention is mounted on a dummy frame 10 fitted horizontally to the frame 11 of the vehicle, e.g. a truck, and which provides for supporting all the mechanical and hydraulic components of the fixture as well as for directly or indirectly supporting an offloadable body 12.

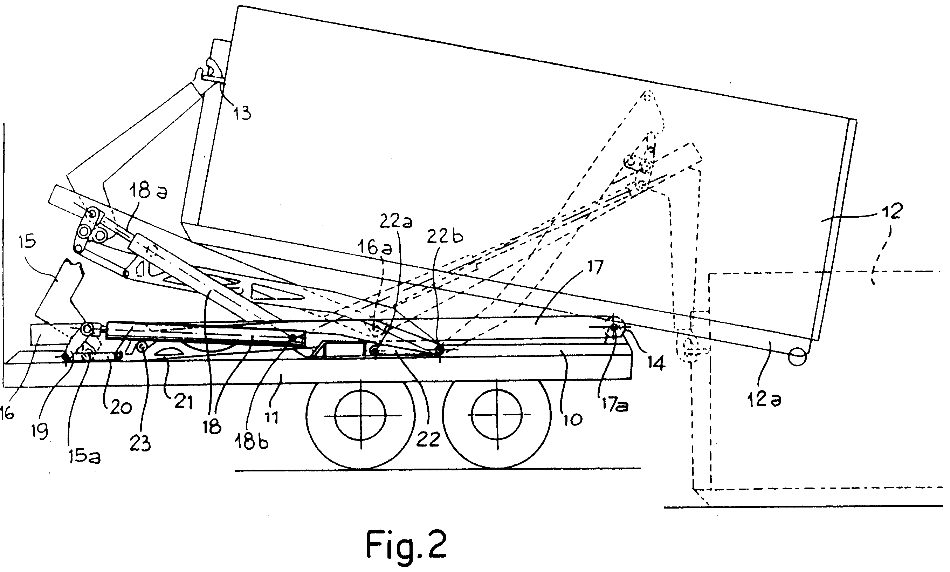

Body 12 presents at least two bottom beams 12a resting on frame 10, and an eye 13 on the front wall, and, when on- and offloaded, runs along rollers 14 (Fig.2) at the rear of frame 10.

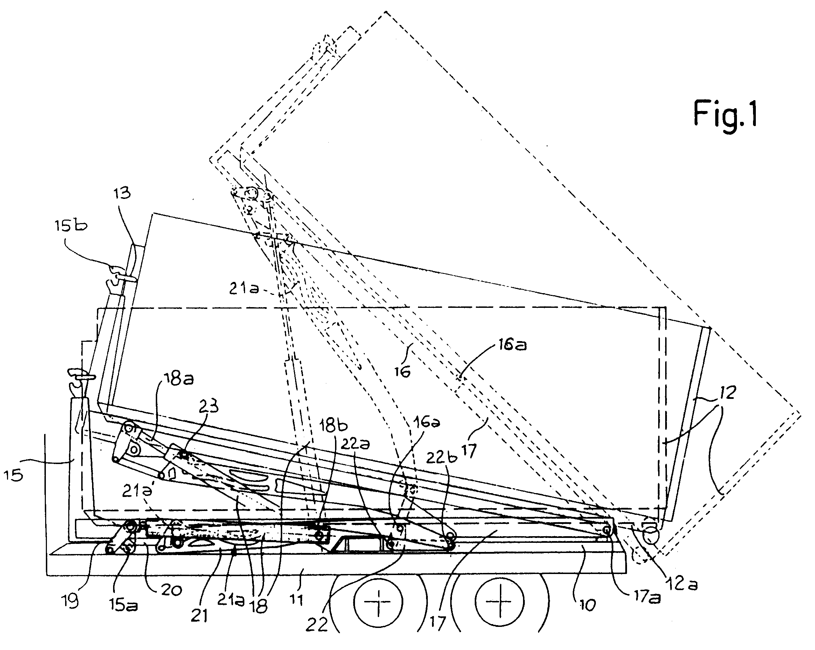

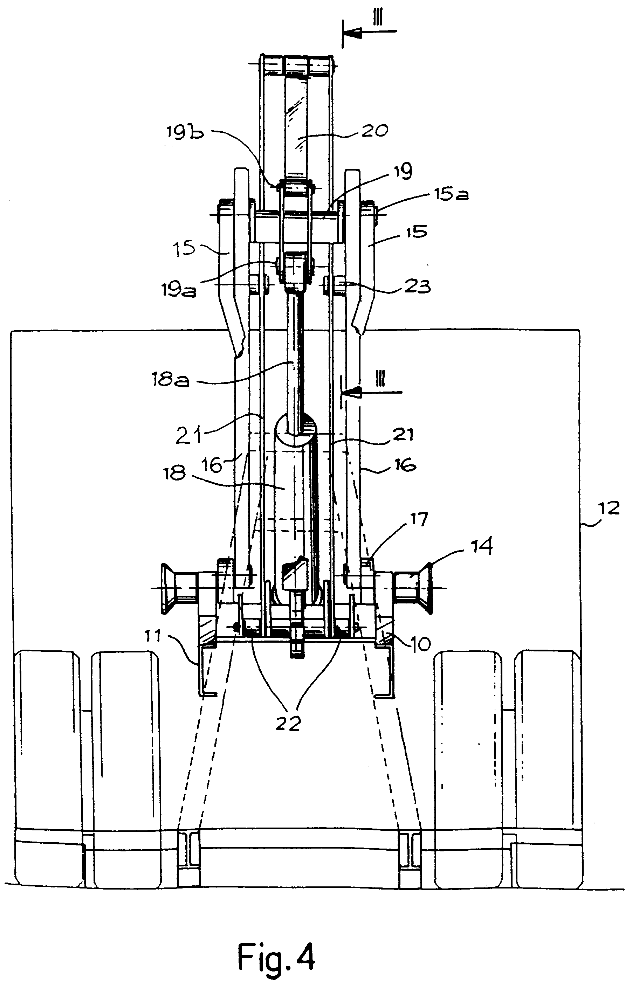

The fixture shown comprises an arm 15 connected at the bottom by a pin 15a to a front lift lever 16 designed to move vertically over frame 10 in the longitudinal plane of the structure. Though reference is made herein to one lever 16, this may be one of a pair of parallel levers 16 as shown in Fig.4. The free end of arm 15 presents a hook 15b (Fig.1) designed to engage eye 13 on body 12.

A hydraulic cylinder (not shown) on lever 16 is connected to arm 15 for moving it angularly about pin 15a even independently of the position of lever 16.

Lever 16 extends rearwards from arm 15 and longitudinally between frame 10 and body 12, and is connected, by an intermediate pin 16a, to at least one rear lever 17 also designed to move vertically.

More specifically, rear lever 17 extends up to the rear of frame 10 where it is connected to a transverse shaft 17a parallel to intermediate pin 16a and supporting slide and guide rollers 14 of body 12.

In addition to lateral rollers for supporting the bottom beams 12a of body 12, front lift lever 16 also presents a hydraulic clamping unit (not shown) for locking lever 16 to body 12; while rear lever 17 presents a hydraulic clamping unit (not shown) for selectively locking lever 17 to frame 10 or body 12.

When front lever 16 is released from body 12 and rear lever 17 locked to frame 10, front lever 16 thus rotates about the intermediate pin 16a for on- and offloading body 12.

Conversely, when front and rear levers 16 and 17 are both locked to body 12, they are substantially integral with each other, and rotate together about rear shaft 17a for tipping body 12 without unloading it off the vehicle.

On- and offloading and tipping are controlled by at least one hydraulic control cylinder 18 fulcrumed at 18b on the intermediate portion of frame 10, with its piston rod 18a facing forward and cooperating with an oscillating transmission lever 19.

Lever 19 may be substantially T-shaped, and presents three hinge pins arranged according to the three vertexes of a triangle and comprising one intermediate pin 15a and two lateral pins 19a and 19b (Fig.4). The intermediate pin may coincide with pin 15a of arm 15, lever 19 in fact being fitted to and oscillating about said pin 15a. The lateral pin 19a carried by an arm 19' of lever 19, and normally facing front lever 16, is connected to rod 18a of control cylinder 18; while the other lateral pin 19b carried by another arm 19'' of lever 19 is connected to the end of a first tie 20, the arms 19' and 19'' being mutually opposite. When provision is made for two front levers 16, lever 19 is obviously connected to both, as shown in Fig.4.

The opposite end of first tie 20 is connected to the front portion of at least one guide lever 21 (preferably two, arranged parallel as shown in Fig.4) extending rearwards. The lever 21 is connected by a pin 22b (Fig.1) to a second articulated tie 22 fulcrumed at 22a on the frame 10.

Lever 21 presents an appropriately cam-shaped recess 21a in which slides a roller 23 by which lever 21 is secured to front lever 16 under any condition and according to operation of the other components.

Like rear lever 17, second tie 22 is and remains secured to frame 10 when on- or offloading body 12, whereas, for tilting the body 12, it is released and permitted to rotate in relation to both the guide lever 21 and frame 10.

Control cylinder 18 is thus connected to front lift lever 16, not directly, but via transmission lever 19 and guide lever 21 with the aid of first tie 20, all of which are articulated. The resulting mechanism therefore provides for so varying the cylinder-lift-lever transmission ratio as to achieve a course of the maximum available torque similar to the course of the resisting torque when on- or offloading or tilting the body.

More particularly the recess 21a includes a first portion 21a' (Fig. 4) substantially perpendicular to the axis of the lever 21, and a second portion 21a'' substantially parallel to said axis. Therefore by rotating the tie 20 on the pin 19b, the roller 23 engages the portion 21a', thus causing the lever 19 firstly to rotate counterclockwise around the pin 15a, with respect to the lever 16, and then clockwise. The clockwise rotation is also effected when the roller engages a first part of the portion 21a'', which has the shape of a S. Finally another counterclockwise rotation is caused when the roller engages a second part of the portion 21a'', till the end of this portion 21a ''.

It is to be pointed out that a rotation of the lever 19, as to move the pin 19a in accordance with the movement of the piston rod 18a, has the effect of increasing the transmission ratio between the movement of the piston rod 18a and the one of the arm 15, with respect to the ratio obtained with a direct connection of the lever 16 with the cylinder. On the contrary, a rotation of the lever 19, as to move the pin 19a in opposition to the movement of the piston rod 18a, has the effect of reducing such a transmission ratio.

Fig. 2 shows part of the fixture by solid lines in an initial position for the offloading cycle, and also shows the entire fixture by continuous line in an intermediate position of the cycle, and by dotted lines in the offloading position. It is to be pointed out that in an offloading cycle the resisting torque, i.e. the product of the weight of the body 12 by the distance of the barycenter thereof from the roller 14 is firstly very high, but then reduces. Thereafter the resisting torque is directed oppositely and increases up to a maximum near the position in dotted lines.

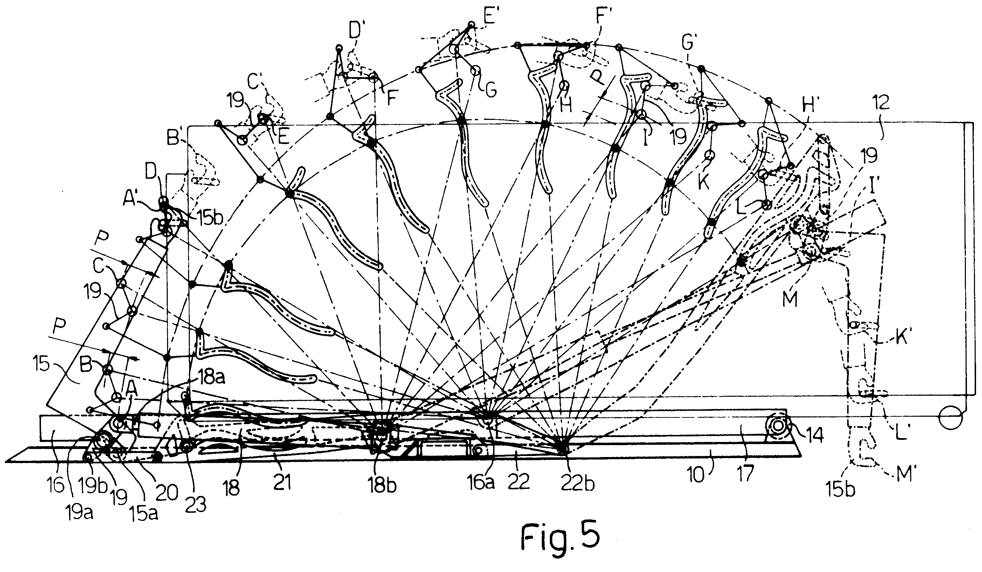

The on- and offloading operation of the body 12 is now described with reference to Fig. 5, where the configurations of the fixture corresponding to twelve positions A-M of the pin 19a are shown. The lever 19 is diagrammatically shown by the three pins 15a, 19a, 19b, thus appearing as L-shaped.

At the beginning of an offloading cycle, the hydraulic cylinder (not shown) between the arm 15 and the lever 16 is operated to bring the arm 15 in the initial position A, without moving the levers 16, 19, 21. In this way the body 12 is displaced rearwards, without being raised.

Subsequently the piston rod 18a is operated for a first stroke P to reach the position B. The roller 2 now engages the portion 21a' of the recess 21a (see also Fig. 4). From position B to position E, which is substantially symmetric to B with respect to the position in which the lever 21 and the lever 16 are aligned, the portion 21a' causes the roller 23 to effect a go and return stroke along the portion 21a'.

The lever 19 is thus caused to effect a rotation around the pin 15a, firstly counterclockwise and then clockwise, whereby the ratio of transmission from the movement of the piston 18a to the one of the arm lever 16 is firstly increased and then decreased, thus producing a course of the maximum available driving torque similar to course of the resisting torque. From position E to position M the roller 23 engages the portion 21a'', which causes the completion of the clockwise rotation of the lever 19, and then a new counterclockwise rotation, thus again adjusting the ratio of transmission to the variable resisting torque. In this way, with the same actuator 18, a body with a higher load can be handled.

In Fig. 5, for each position A-M of the pin 19a, the corresponding position A'-M' of the hook 15b is indicated. The positions A-M correspond to a constant stroke P of the piston rod 18a. From Fig. 5, it is evident that the same displacement P of the pin 19a causes different displacements of the hook 15b. It is also evident that during the onloading cycle the same positions are reached in opposite order by operating the piston rod 18a toward the cylinder.

Similarly, Fig. 1 shows the fixture in the idle position (continuous line, with body 12 in dashed lines), and two successive tilting positions (solid lines and dotted lines respectively) to illustrate the operation and the mutual relationship of the various parts of the fixture. Particularly in this cycle the tie 22 rotates around the pin 22a.

It is to be noted that, in the tilting cycle, only the portion 21a' of the recess 21a is effective for causing a single counterclockwise rotation of the lever 19. The roller 23 reaches the end position in the portion 21a' substantially when the lever 21 and the lever 16 are aligned, as shown in the solid line position. Thereafter, the roller 23 remains in this position and the rotation of the piston rod 18a causes a corresponding rotation of levers 16 and 17 in the various positions.

In conclusion the most critical operating conditions, obviously, are known to be encountered at the start of the tipping, onloading or offloading cycle, when the resisting torque is maximum.

At such times, the fixture according to the present invention provides for increasing the transmission ratio between the control cylinder and lever 16 (and, hence, also the body 12), so as to achieve maximum torque and minimum speed as required. Moreover, as the resisting torque decreases, the transmission ratio also decreases gradually to give a minimum but adequate torque combined with maximum speed in the part of the cycle in which the resisting torque is also minimum.

It is evident that several modifications and improvements can be done to the described fixture without departing from the scope of the claims. For example the fixture could be modified for operating a container, in form of a substantially cylindrical tank adapted for supplying particulate materials into a silo. In this case the fixture should be adapted to tilt the container substantially 90°, i.e. till it reaches the position with its axis located vertically. Furthermore the body 12 either in form of a prismatic box or of a tank could be mounted on a trailer or on a railroad car, rather than on a motor vehicle.

In addition the tie 22 could be pivoted on a pin 22a, which at rest can be located rearwards with respect to the pin 22b. Possibly the pin 22a could be coincident with the shaft 17a, and the tie 22 could be rotated directly by the rear lever 17 after a predetermined rotation thereof.

In turn the roller 23 could be designed coaxially with the pin 15a connecting the front lever 16 with the transmission lever 19, and/or the cylinder 18 could be of the telescopic multiple type. Finally, the shape of the recess 21a could be altered to provide a different variation of the transmission ratio through the stroke of the lever 16 in both the loading and the tilting cycle.

## Claims

1. A fixture for onloading, offloading and tilting industrial vehicle bodies, said fixture comprising a frame (10) supporting a vehicle body (12), at least one hook arm (15) engaging an eye (13) of said body (12), at least one front lift lever (16) extending rearwards and pivoting on a fulcrum (16a) to rotate with respect to said frame (10), and at least one hydraulic control cylinder (18) for raising the front lever (16), characterized in that said cylinder (18) is connected to said front lever (16) indirectly via a system of levers and joints (19-23) adapted to cause a variation of the transmission ratio between said cylinder (18) and said front lever (16) in such a manner as to obtain the available power with its components of driving torque and speed corresponding to the value of the resisting torque to be overcome in any position thereof during the onloading, the offloading and tipping cycles.

2. A fixture according to claim 1, characterized in that said system (19-23) comprises a transmission lever (19) rotatable on an intermediate pin (15a) fitted of to said front lever (16), said transmission lever (19) having a first arm (19') hinged on the end of a piston rod (18a) of said cylinder (18), and a second arm (19'') connected with a member (21) capable of causing the rotation of said transmission lever (19) to vary said transmission ratio.

3. A fixture according to claim 2, characterized in that said member is a guide lever (21) extending rearwards and pivoting on said frame (10), said system (19-23) also comprising a cam-and-follower joint (21a, 23) between said guide lever (21) and said front lever (16) to cause said rotation.

4. A fixture according to claim 3, characterized in that said guide lever (21) is connected with to a first tie (20) in turn hinged on said second arm (19''), said joint (21a, 23) including a cam-shaped recess (21a) provided in said guide lever (21) and a roller (23) fitted in said front lever (16).

5. A fixture according to claim 4, characterized in that said recess (21a) comprises a first portion (21a') substantially perpendicular to the axis of said guide lever (21), and a second portion (21a'') substantially along said axis, each said portions (21a', 21a'') causing a corresponding oscillation of said transmission lever (19) around said intermediate pin (15a).

6. A fixture according to claim 5, characterized in that said guide lever (21) is pivoted on a second fulcrum (22b) different than the fulcrum (16a) of said front lever (16), said first portion (21a') being effective for a first oscillation of said intermediate lever (19) during a first part of the path of said guide lever (21) through a double stroke of said roller (23) along said first portion (21a').

7. A fixture according to claim 6, characterized in that said second portion (21a'') has the shape of a S and is effective during a second part of the path of said guide lever (21) through a single stroke of said roller (23) along said second portion (21a'').

8. A fixture according to any claim from 4 to 7, characterized in that said intermediate pin coincides with the pin (15a) by which said hook arm (15) pivots on said front lever (16), said intermediate pin (15a) and the hinge pins (19a, 19b) by which said arms (19', 19'') are hinged on laid piston rod (18a) and on said first tie (20) being arranged according to the three vertexes of a triangle.

9. A fixture according to any preceding claim, characterized in that the fulcrum (16a) of said front lever (16) is fitted on at least one rear lever (17) pivoting on a shaft (17a) at the rear of said frame (10), and comprising a first lock/release unit for locking said front lever (16) to said body (12), and a second lock/release unit either for locking said rear lever (17) to said frame (10) when said front lever (16) is released from said body (12) to cause said cylinder (18) to effect said on-/offloading cycle, or for locking said rear lever (17) to said body (12) when said front lever (16) is also locked to the body (12) to cause said cylinder (18) to effect said tilting cycle.

10. A fixture according to claims 8 and 9, characterized in that said cam-shaped recess (21a) is so shaped as to cause a relative movement of said guide lever (21) and the front lever (16) in response to rotation of said transmission lever (19) either alone or together with said rear lever (17).

11. A fixture according to claims 6 and 10, characterized in that said second fulcrum (22b) is fitted on a second tie (22) pivoting on a pin (22a) fitted in said frame (10), said second tie (22) being adapted to be locked to said frame (10) with said rear lever (17) when both the front lever (16) and the rear lever (17) are released from said body (12).

12. A fixture according to claim 11, characterized in that, with said second tie (22) released from said frame (10) for a tilting cycle, the first portion (21a') of said recess (21a) is effective for rotating said transmission lever (19) during said first part of the path of said guide lever (21) to vary said ratio.
